(19) Europäisches Patentamt / European Patent Office / Office européen des brevets

(11) **EP 2 402 381 A1**

(12) **EUROPEAN PATENT APPLICATION**
published in accordance with Art. 153(4) EPC

(43) Date of publication:
04.01.2012 Bulletin 2012/01

(51) Int Cl.:
*C08G 18/00* (2006.01)   *C08G 18/10* (2006.01)
*C08G 18/80* (2006.01)   *C09D 5/02* (2006.01)
*C09D 175/04* (2006.01)

(21) Application number: 10746199.8

(22) Date of filing: 23.02.2010

(86) International application number:
PCT/JP2010/052759

(87) International publication number:
WO 2010/098318 (02.09.2010 Gazette 2010/35)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 26.02.2009  JP 2009043485

(71) Applicant: Ube Industries, Ltd.
Ube-shi
Yamaguchi 755-8633 (JP)

(72) Inventors:
• MORIKAMI, Atsushi
Yamaguchi 755-8633 (JP)

• NAIKI, Masahiro
Yamaguchi 755-8633 (JP)
• ADACHI, Fumio
Yamaguchi 755-8633 (JP)
• TAKAHASHI, Manabu
Yamaguchi 755-8633 (JP)

(74) Representative: Beckmann, Claus
Kraus & Weisert
Patent- und Rechtsanwälte
Thomas-Wimmer-Ring 15
80539 München (DE)

(54) **AQUEOUS POLYURETHANE RESIN DISPERSION AND METHOD FOR PRODUCING SAME**

(57)   An aqueous polyurethane resin dispersion which can easily carry out repaint or removal of an extra coating film after coating on a substrate material, and has high coating film hardness is to be provided.

It is an aqueous polyurethane resin dispersion which comprises (A) a polyurethane resin obtained by reacting (a) a polyisocyanate compound, (b) at least one polyol compound containing a polycarbonate polyol having a number average molecular weight of 400 to 3000, (c) an acidic group-containing polyol compound, and (d) a blocking agent for an isocyanate group, which dissociates at 80 to 180˚C, being dispersed in an aqueous medium, a sum of a content of urethane bodings and a content of urea bondings is 7 to 40% by weight in terms of solid components, a content of carbonate bondings is 8 to 40% by weight in terms of solid components, and a content of an isocyanate group to which the above-mentioned blocking agent has bound is 2 to 10% by weight in terms of solid components and calculated on the isocyanate group.

**Description**

TECHNICAL FIELD

The present invention relates to an aqueous polyurethane resin dispersion in which a polyurethane resin is dispersed in an aqueous medium and a process for preparing the same. The present invention also relates to a coating composition containing the above-mentioned aqueous polyurethane resin dispersion and a laminated material in which a coating layer obtained by heating and drying a composition containing the above-mentioned polyurethane resin dispersion is provided on the surface of a substrate.

BACKGROUND ART

An aqueous polyurethane resin dispersion is a material now substituting for a conventional solvent type polyurethane as an environment-friendly material since it can provide a coating film having adhesive property, wear resistance and rubbery properties, and a volatile organic material can be reduced as compared with the conventional solven type polyurethane.
A polycarbonate polyol is a useful compound as a starting material for preparing a polyurethane resin which is used for preparing a polyurethane resin having durability to be used for a hard foam, a soft foam, a paint, an adhesive, artificial leather, ink binder etc., by the reaction with an isocyanate compound. It has been described that characteristics of the polyurethane resin using the polycarbonate polyol are revealed by high cohesive force due to the carbonate group, and the material is excellent in water resistance, heat resistance, oil resistance, recovery of elasticity, wear resistance and weather resistance (see Non-Patent Literature 1). Also, in a coating film obtained by coating an aqueous urethane resin dispersion using a polycarbonate polyol as a starting material, it has been known that the film is excellent in light resistance, heat resistance, hydrolysis resistance and oil resistance (see Patent Literature 1).
The aqueous polyurethane resin dispersion using a polycarbonate polyol shows good characteristics as mentioned above, but its characteristics are not necessarily sufficient as compared with those using a solvent type polyurethane. In particular, solvent resistance and water resistance of the coated film are insufficient. It has been carried out to introduce a cross-linking structure into a polyurethane resin or to add a crosslinking material such as an epoxy resin and a polyfunctional isocyanate, etc. to carry out cross-linking at the time of curing for the purpose of improving such characteristics. Of these, an aqueous polyurethane resin dispersion having a blocked isocyanate group is stable at normal temperatue, so that it has high utilization value as an one-component cross-linkable dispersion having high storage stability (Patent Literature 2 and Patent Literature 3). An aqueous polyurethane resin dispersion using a polycarbonate polyol as a starting material has been known that it has characteristics of having high adhesiveness to an electrodeposition film (Patent Literature 4).
[Patent Literature 1] JP H10-120757A
[Patent Literature 2] JP 2002-128851A
[Patent Literature 3] JP 2000-104015A
[Patent Literature 4] JP 2005-220255A
[Non-Patent Literature 1] "Latest polyurethane material and applied techniques" published by CMC Publishing Co., Ltd., Chapter 2, p. 43

DISCLOSURE OF THE INVENTION

PROBLEMS TO BE SOLVED BY THE INVENTION

When an aqueous polyurethane resin dispersion is used as a material for a film, a paint or a coating, coating to a substrate, etc., is carried out by using a coating device such as a bar coater, roll coater, air spray, etc.
The conventional aqueous polyurethane resin dispersion which can form a coatig film having high solvent resistance and water resistance involves a problem that after coating to a substrate material, it is difficult to remove the paint layer of coated film by washing or peeling the same and to coat again. In particular, when an aqueous polyurethane resin dispersion having high adhesiveness to the substrate material is once coated thereon, for peeling off the formed film therefrom, it is necessary to dissolve or redisperse the coated film by using an organic solvent, etc. However, when an organic solvent or a large amount of a surfactant is used, there are problems that the treatment of the waste solution becomes troublesome, the substrate material is dissolved, or other coated film coated on the substrate material is also peeled off, etc.
On the other hand, it has earnestly been desired to develop an aqueous polyurethane resin dispersion which can form a coating film having high impact resistance, high adhesiveness to an electrodeposition film, and which can be easily coated again, or a paint or a coated film coated onto an extra portion be easily removable, for the preparation of a protective film for an electrodeposition film coated on a steel plate such as construction materials, electric devices, vehicles, industrial devices, office machines, etc.

MEANS TO SOLVE THE PROBLEMS

The present invention has been done to solve the above-mentioned problems, and specifically has the following constitution.

[1] An aqueous polyurethane resin dispersion which comprises (A) a polyurethane resin obtained by reacting (a) a polyisocyanate compound, (b) at least one polyol compound containing a polycarbonate polyol having a number average molecular weight of 400 to 3000, (c) an acidic group-containing polyol compound, and (d) a blocking agent for an isocyanate group, which dissociates at 80 to 180˚C, being dispersed in an aqueous medium, a sum of a content of urethane bodings and a content of urea bondings is 7 to 30% by weight in terms of solid components, a content of carbonate bondings is 8 to 40% by weight in terms of solid components, and a content of an isocyanate group to which the above-mentioned blocking agent has bound is 2 to 10% by weight in terms of solid components and calculated on the isocyanate group.
[2] The aqueous polyurethane resin dispersion described in the above-mentioned (1), wherein the polyurethane resin has a weight average molecular weight of 1,500 to 10,000.
[3] The aqueous polyurethane resin dispersion described in the above-mentioned [1] or [2], wherein an acid value is 10 to 40 mg KOH/g in terms of a solid component(s).
[4] The aqueous polyurethane resin dispersion described in any one of the above-mentioned [1] to [3], wherein the polyurethane resin contains an alicyclic structure, and a content of the alicyclic structure is 10 to 60% by weight in terms of a solid component(s).
[5] The aqueous polyurethane resin dispersion described in any one of the above-mentioned [1] to [4], wherein (b) the polyol compound contains a polycarbonate polyol having an alicyclic structure.
[6] The aqueous polyurethane resin dispersion described in any one of the above-mentioned [1] to [5], wherein (a) the polyisocyanate compound is an alicyclic diisocyanate.
[7] The aqueous polyurethane resin dispersion described in any one of the above-mentioned [1] to [6], wherein (d) the blocking agent is one or more selected from the group consisting of an oxime series compound, a pyrazole series compound and a malonic acid diester series compound.
[8] A process for preparing the aqueous polyurethane resin dispersion described in any one of the above-mentioned [1] to [7], which comprises

(1) a step of reacting (a) a polyisocyanate compound, (b) a polyol compounds, (c) an acidic group-containing polyol compound and (d) a blocking agent to obtain a polyurethane resin,
(2) a step of neutralizing an acidic group in the polyurethane resin obtained in the step (1), and
(3) a stp of dispersing the polyurethane resin obtained in the step (2) in an aqueous medium.

[9] A coating composition containing the aqueous polyurethane resin dispersion described in any one of the above-mentioned [1] to [7].
[10] A laminated material which comprises a polyurethane resin coating layer obtained by heating and drying a composition containing the aqueous polyurethane resin dispersion described in any one of the above-mentioned [1] to [7] being provided on the surface of a substrate material.

EFFECTS OF THE INVENTION

According to the present invention, it can be provided an aqueous polyurethane resin dispersion which is controlled in a film-preparation rate after coating and redispersion of the resulting coating film in water is easy. By using the aqueous polyurethane resin dispersion of the present invention, repaint or removal of an extra coating film can be easily carried out so that its utility and convenience are high.
Also, the coating film obtained by coating the aqueous polyurethane resin dispersion of the present invention and subjecting to a heat treatment is excellent in water resistance and solvent resistance, also excellent in adhesiveness to an electrodeposition film, and have high hardness.

BEST MODE TO CARRY OUT THE INVENTION

[(a) Polyisocyanate compound]

The polyisocyanate compound (a) which can be used in the present invention is not particularly limited, and a diisocyanate compound having two isocyanate groups per one molecule is preferred.

More specifically, there may be mentioned an aromatic polyisocyanate compound such as 1,3-phenylenediisocyanate, 1,4-phenylenediisocyanate, 2,4-tolylenediisocyanate (TDI), 2,6-tolylenediisocyanate, 4,4'-diphenylenernethane diisocyanate (MDI), 2,4-diphenylmethane diisocyanate, 4,4'-diisocyanate biphenyl, 3,3'-dimethyl-4,4'-diisocyanate biphenyl, 3,3'-dimethyl-4,4'-diisocyanatodiphenylmethane, 1,5-naphthylene diisocyanate, m-isocyanatophenylsulfonyl isocyanate, p-isocyanatephenylsulfonyl isocyanate, etc.; an aliphatic polyisocyanate compound such as ethylene diisocyanate, tetramethylene diisocyanate, hexamethylene diisocyanate (HDI), dodecamethylene diisocyanate, 1,6,11-undecanetriisocyanate, 2,2,4-trimethylhexamethylene diisocyanate, lysine diisocyanate, 2,6-diisocyanate methylcaproate, bis(2-isocyanatoethyl)fumarate, bis(2-isocyanatoethyl) carbonate, 2-isocyanatoethyl-2,6-diisocyanate hexanoate, etc.; and an alicyclic polycyanate compound such as isophorone diisocyanate (IPDI), 4,4'-dicyclohexylmethane diisocyanate (hydrogen-added MDI), cyclohexylene diisocyanate, methylcyclohexylene diisocyanate (hydrogen added TDI), bis(2-isocyanatoethyl)-4-cyclohexene-1,2-dicarboxylate, 2,5-norbornane diisocyanate, 2,6-norbornane diisocyanate, etc. These polyisocyanate compounds may be used a single kind alone, or two or more kinds in combination.

Of the above-mentioned (a) polyisocyanate compounds, the alicyclic polyisocyanate compound is preferred. By using the above-mentioned alicyclic polyisocyanate compound, a coating film difficultly yellowing can be obtained, and a hardness of the resulting coating film tends to be heightened. As the alicyclic polyisocyanate compound, an alicyclic diisocyanate compound is preferred.

Of these, in the view points of controlling the reactivity and having high modulus of elasticity of the resulting coating film, isophorone diisocyanate (IPDI) and/or 4,4'-dicyclohexylmethane diisocyanate (hydrogen-added MDI) is/are particularly preferred.

[(b) Polyol compound]

The polyol compound (b) of the present invention is one or more kinds of polyol compound(s) containing a polycarbonate polyol having a number average molecular weight of 400 to 3000.

[[(b-1) Polycarbonate polyol having a number average molecular weight of 400 to 3000]]

The polycarbonate polyol having a number average molecular weight of 400 to 3000 which can be used in the present invention is not particularly limited so long as it has a number average molecular weight of 400 to 3000.

If the number average molecular weight of the above-mentioned polycarbonate polyol is less than 400, there is a problem that a breaking energy at tension of the resulting coating film is low, etc. If the number average molecular weight of the above-mentioned polycarbonate polyol exceeds 3000, there is a problem that a film-forming property of the resulting aqueous polyurethane resin is poor, etc. Thus, the number average molecular weight is more preferably 800 to 2500 in the view point of film-forming property. It is also preferred to use a polycarbonate diol having two hydroxyl groups per one molecule.

As the above-mentioned polycarbonate polyol, a polycarbonate polyol prepared by the general preparation method such as an ester exchange method of a polyol and a carbonic acid ester, and a phosgene method, etc. may be used.

A ratio of the above-mentioned (b-1) polycarbonate polyol having a number average molecular weight of 400 to 3000 in the above-mentioned (b) polyol compound is preferably 50 to 100% by weight in the view point of a breaking energy at the time of tension of the resulting coating film, more preferably 70 to 100% by weight, particularly preferably 85 to 100% by weight. In the present invention, a number average molecular weight (Mn) of the polycarbonate polyol can be obtained from the hydroxyl value according to the following formula.

$$Mn = (56100 \times \text{number of valence})/\text{a hydroxyl value}$$

In the above-mentioned formula, the number of valence is a number of a hydroxyl group(s) in one molecule, and the hydroxyl value is measured by the method B according to JIS K 1557. When the polycarbonate polyol is a polycarbonate diol, then the number of valence is 2.

The polyols which become the starting material of the above-mentioned polycarbonate polyol may be mentioned aliphatic diols such as ethylene glycol, 1,3-propanediol, 1,4-butanediol, 1,5-pentanediol, 1,6-hexanediol, 1,7-pentanediol, 1,8-octanediol, 1,9-nonanediol, 1,10-decandiol, 1,12-dodecanediol, etc., and 1,3-butanediol, 3-methylpentane-1,5-diol, 2-ethylhexane-1,6-diol, 2-methyl-1,3-pentanediol, neopentylglycol, 2-methyl-1,8-octanedioi, etc.; alicyclic diols such as 1,3-cyclohexanediol, 1,4-cyclohexanediol, 2,2'-bis(4-hydroxycyclohexyl)propane, 1,4-cyclohexanedimethanol, etc.; aromatic diols such as 1,4-benzenedimethanol, etc.; and polyfunctional polyols such as trimethylolpropane, pentaerythritol, etc. The above-mentioned polyols may be used singly to prepare the above-mentioned polycarbonate polyol, or may be used in a plural number thereof to prepare a polycarbonate polyol.

The above-mentioned polycarbonate polyol is preferably a polycarbonate polyol containing the above-mentioned aliphatic diol or alicyclic diol unit, more preferably a polycarbonate polyol containing the above-mentioned alicyclic diol unit, and particularly preferably a polycarbonate polyol containing 1,4-cyclohexanedimethanol unit.

In the present invention, the aliphatic diol unit and alicyclic diol unit mean the portion derived from an aliphatic diol and alicyclic diol, and the portion in which the hydrogen atom at the hydroxyl group of the aliphatic diol and alicyclic diol is removed.

[[(b-2) Other polyol compound]]

In the present invention, in (b) the polyol compound, in addition to the above-mentioned (b-1) polycarbonate polyol having a number average molecular weight of 400 to 3000, (b-2) other polyol compound(s) can be mixed.

The above-mentioned other polyol compound(s) is not particularly limited, and there may be mentioned, for example, a polyester polyol, a polyether polyol, a polycarbonate polyol having a number average molecular weight of other than 400 to 3000, an aliphatic diol, an alicyclic diol, an aromatic diol, a poly-functional polyol, etc. Of these, an aliphatic diol, an alicyclic diol, and a polycarbonate polyol having a number average molecular weight of other than 400 to 3000 are preferred. Here, in the (b-2) other polyol compound(s), (c) an acidic group-containing polyol compound mentioned in the next paragraph is not contained.

[(c) Acidic group-containing polyol compound]

The (c) acidic group-containing polyol compound which can be used in the present invention is not particularly limited so long as it is a compound containing two or more hydroxyl groups and one or more acidic group in one molecule. The acidic group may be mentioned a carboxyl group, a sulfonyl group, a phosphoric acid group, etc.

More specifically, there may be mentioned 2,2-dimethylol alkanoic acid such as 2,2-dimethylol propionic acid, 2,2-dimethylol butanoic acid, etc., N,N-bishydroxyethylglycine, N,N-bishydroxyethylalanine, 3,4-dihydroxybutanesulfonic arid, 3,6-dihydroxy-2-toluenesulfonic acid, etc. These may be used a single kind alone or may be used a plural kinds thereof in combination. Among the above-mentioned an acidic group-containing polyol compound, 2,2-dimethylol propionic acid or/and 2,2-dimethylol butanoic acid is/are preferred in the viewpoint of easily obtainable.

[(d) Blocking agent]

The blocking agent for the isocyanate group which can be used in the present invention may include those which dissociate from the isocyanate group at 80 to 180˚C.

The blocking agent which dissociates from the isocyanate group at 80 to 180˚C may be mentioned, for example, a malonic acid diester series compound such as dimethyl malonate, diethyl malonate, etc.; a pyrazole series compound such as 1,2-pyrazole, 3,5-dimethylpyrazole, etc.; an oxime series compound such as 1,2,4-triazole, methyl ethyl ketoxime, etc.; diisopropylamine, caprolactam, etc. These may be used a single kind alone or may be used a plural kinds thereof in combination.

Among the above-mentioned blocking agent, one or more selected from an oxime series compound, a pyrazole series compound and a malonic acid diester series compound is preferred in the viewpoint of the dissociation temperature, and methylethyl ketoxime is particularly preferred in the viewpoint of preservation stability.

[(A) Polyurethane resin]

The (A) polyurethane resin which can be used in the present invention is a polyurethane resin obtained by reacting (a) the polyisocyanate compound, (b) the polyol compound, (c) the acidic group-containing polyol compound and (d) the blocking agent.

The preparation method of the above-mentioned polyurethane resin is not particularly limited, and, for example, the following method may be mentioned.

The first one is a method in which (a) the polyisocyanate compound, (b) the polyol compound and (c) the acidic group-containing polyol compound are reacted in the presence or absence of a urethanization catalyst to carry out urethanization, thereafter (d) the blocking agent is reacted therewith in the presence or absence of a blocking catalyst to synthesize (A) a polyurethane resin in which a part of the terminal isocyanate groups is blocked.

The second one is a method in which (a) the polyisocyanate compound and (d) the blocking agent are reacted in the presence or absence of a blocking catalyst to synthesize a polyisocyanate compound in which a part is blocked, and the resulting material is reacted with (b) the polyol compound and (c) the acidic group-containing polyol compound in the presence or absence of a urethanization catalyst to synthesize (A) a polyurethane resin.

The above-mentioned urethanization catalyst is not particularly limited, and there may be mentioned, for example, a salt of a metal and an organic and inorganic acid such as a tin series catalyst (trimethyl tin laurate, dibutyl tin dilaurate, etc.) or a lead series catalyst (lead octylate, etc.), etc., and an organometallic derivative, amine series catalyst (triethylamine, N-ethylmorpholine, triethylenediamine, etc.), diazabicycloundecene series catalyst, etc. Of these, dibutyl tin dilaurate is preferred in view of reactivity.

The above-mentioned blocking catalyst is not particularly limited, and there may be mentioned, for example, dibutyl tin dilaurate or an alkali catalyst such as sodium methoxide, etc.

Each amount of (a), (b), (c) and (d) to be used is not particularly limited so long as a sum of a content of urethane bodings and a content of urea bondings being 7 to 18% by weight in terms of a solid component(s), a content of carbonate bondings being 15 to 40% by weight in terms of a solid component(s), and a content of the isocyanate group to which the above-mentioned blocking agent is bonded being 0.2 to 3% by weight in terms of a solid component(s) and calculated on the isocyanate group, and the following amounts are preferred. An amount of the (b) to be used is preferably 0.4 to 0.9-fold based on (a) in terms of a molar standard, more preferably 0.5 to 0.75-fold, and particularly preferably 0.55 to 0.7-fold. An amount of the (c) to be used is preferably 0.2 to 4-fold based on (b) in terms of a molar standard, more preferably 0.5 to 2-fold, and particularly preferably 0.8 to 1.2-fold. An amount of the (d) to be used is preferably 0.01 to 0.4-fold based on (a) in terms of a molar standard, more preferably 0.02 to 0.3-fold, and particularly preferably 0.03 to 0.2-fold.

[(B) Chain elongating agent]

The polyurethane resin of the present invention may be reacted with (B) the chain elongating agent to carry out chain elongation. The above-mentioned (B) chain elongating agent is not particularly limited, and there may be mentioned, for example, amine compounds such as ethylenediamine, 1,4-tetramethylenediamine, 2-methyl-1,5-pentanediamine, 1,6-hexamethylenediamine, 1,4-hexamethylenediamine, 3-aminomethyl-3,5,5-trimethyleyclohexylamine, 1,3 -bis(aminomethyl)cyclohexane, xylylenediamine, piperazine, 2,5-dimethylpiperazine, diethylenetriamine, triethylenetetramine, hydrazine, etc., polyalkylene glycols represented by the diol compound and polyethylene glycol such as ethylene glycol, propylene glycol, 1,4-butanediol, 1,6-hexanediol, etc., and water, etc., and among these, preferably mentioned is a primary diamine compound. These may be used a single kind alone or may be used a plural kinds thereof in combination.

An amount of the above-mentioned (B) chain elongating agent to be added is preferably an equivalent amount or less of the isocyanate group in the above-mentioned (A) polyurethane resin which is not blocked and becomes a starting point of chain elongation, more preferably 0.7 to 0.99 equivalent of the isocyanate group which is not blocked. If the chain elongating agent is added in excess of the equivalent amount of the isocyanate group which is not blocked, a molecular weight of the chain elongated polyurethane resin is lowered in some cases, and the strength of the coated film obtained by coating the resulting aqueous polyurethane resin dispersion is lowered in some cases.

In the present invention, in the viewpoints of redispersibility in water and coating film hardness, (A) the polyurethane resin is preferably not reacted with (B) the chain elongating agent (chain elongation is not carried out).

[Aqueous polyurethane resin dispersion]

A preparation process of the aqueous polyurethane resin dispersion of the present invention is not particularly limited, and may be prepared, for example, by the following method.

As mentioned above, the aqueous polyurethane resin dispersion can be prepared by, after the step of reacting (a) a polyisocyanate compound, (b) a polyol compound, (c) an acidic group-containing polyol compound and (d) a blocking agent to obtain a polyurethane resin, a step of neutralizing an acidic group in the above-mentioned polyurethane resin, and a step of dispersing the above-mentioned polyurethane resin in an aqueous medium.

Also, in the above-mentioned preparation method, after the step of dispersing the polyurethane resin in an aqueous medium, a step of reacting a chain elongating agent may be provided. Addition of the chain elongating agent may be after dispersing the polyurethane resin into the aqueous medium, or may be during the dispersing the same.

The above-mentioned respective steps may be carried out under inert gas atmosphere, or may be in the air.

In the aqueous polyurethane resin dispersion of the present invention, it is required to be the sum of the urethane bondings and urea bondings in the above-mentioned aqueous polyurethane resin dispersion to be 7 to 30% by weight in terms of a solid component(s), more preferably 10 to 25% by weight, particularly preferably 10 to 20% by weight, and, for example, it can be made 10 to 17% by weight.

If the sum of the contents of the above-mentioned urethane bondings and urea bondings is too little, there are problems that a coating film cannot be formed, and after drying, the surface of the coating film is sticky, etc. Also, if the sum of the contents of the above-mentioned urethane bondings and urea bondings is too much, when the aqueous polyurethane resin dispersion is coated on a substrate material, redispersibility of the paint or coated film into a solvent is poor so that removal thereof is difficult, and recoat cannot be carried out in some cases.

The sum of the contents of the urethane bondings and urea bondings can be controlled by the respective molecular weights of (a) the polyisocyanate compound, (b) the polyol compound, (c) the acidic group-containing polyol compound, (d) the blocking agent and (B) the chain elongating agent, each number of hydroxyl groups, isocyanate groups and amino groups in one molecule and contents of the respective starting materials in the aqueous polyurethane resin dispersion in terms of solid components.

In the aqueous polyurethane resin dispersion of the present invention, it is required that a content of the carbonate bondings in the above-mentioned aqueous polyurethane resin dispersion to be 8 to 40% by weight in terms of a solid component(s), more preferably 10 to 30% by weight, and particularly preferably 10 to 20% by weight.

If the above-mentioned content of carbonate bondings is too little, there is a problem that the resulting coating film is poor against impact. Also, if the above-mentioned content of carbonate bondings is too much, there are problems that a coating film cannot be formed, and after drying, the surface of the coating film is sticky, etc.

The content of the carbonate bondings can be controlled by the number average molecular weight and a used ratio in the aqueous polyurethane resin dispersion in terms of a solid component(s) of the polycarbonate polyol, a molecular weight of the polyol unit constituting the polycarbonate polyol and a used ratio of the respective starting materials which form the carbonate bondings. The polyol unit means a unit in which a hydrogen atom is removed from the hydroxyl group of the polyol.

In the aqueous polyurethane resin dispersion of the present invention, it is required that a content of the isocyanate group which is blocked by a blocking agent is required to be 2 to 10% by weight in terms of a solid component (s) and calculated on the isocyanate group, and particularly preferably 5 to 10% by weight.

If the content of the above-mentioned blocked isocyanate group is too little, there are problems that adhesiveness of the resulting coating film to the surface of the electrodeposition-coating plate is poor and hardness of the coating film is insufficient. Also, if the content of the above-mentioned blocked isocyanate group is too much, there is a problem that the resulting coating film is poor against impact.

A content of the isocyanate group which is blocked by a blocking agent can be controlled by a used ratio of (d) the blocking agent in the aqueous polyurethane resin dispersion in terms of a solid component(s), when (d) the blocking agent is used in a molar number less than (X), wherein a molar number of the remaining isocyanate group is made (X) which is obtained by deducting a molar number of the hydroxyl group contained in (b) the polyol compound and a molar number of the hydroxyl group contained in (c) the acidic group-containing polyol compound from a molar number of the isocyanate group contained in (a) the polyisocyanate compound. If an amount of (d) the blocking agent to be used is larger than (X), the content of the isocyanate group blocked by the blocking agent can be determined by the value of (X) in terms of a solid component(s) in the aqueous polyurethane resin dispersion.

A weight average molecular weight of the above-mentioned aqueous polyurethane resin dispersion is not particularly limited, and preferably 1,500 to 10,000, and the upper limit is more preferably less than 10,000. The weight average molecular weight is more preferably 1,500 to 8,000, and particularly preferably 3,000 to 5,000.

If the weight average molecular weight of the above-mentioned aqueous polyurethane resin dispersion is too small, the coated film becomes poor against impact in some cases. Also, if the weight average molecular weight of the above-mentioned aqueous polyurethane resin dispersion is too large, when the resulting aqueous polyurethane resin dispersion is coated on a substrate material, redispersibility of the paint or the coated film in a solvent is poor so that it becomes hardly removable, whereby recoating is difficultly applied in some cases.

In the present invention, the weight average molecular weight is a value measured by gel permeation chromatography (GPC), and is a converted value obtained from the calibration curve of the standard polystyrene provisionally prepared.

The acid value of the above-mentioned aqueous polyurethane resin dispersion is not particularly limited, and preferably 10 to 40 mg KOH/g in terms of a solid component(s), and more preferably 20 to 35 mg KOH/g. If the acid value of the above-mentioned aqueous polyurethane resin dispersion is smaller or larger than the range of 10 to 40 mg KOH/g in terms of a solid component(s), dispersibility in an aqueous medium tends to be poor. The acid value can be measured in accordance with an indicator titration method of JIS K 1557. For the measurement, measurement is to be carried out after removing the neutralizing agent which is used for neutralizing the acidic group. For example, when the organic amines are used as a neutralizing agent, the aqueous polyurethane resin dispersion was coated on a glass plate, and a coating film obtained by drying at a temperature of 60°C, under a reduced pressure of 20 mmHg for 24 hours was dissolved in N-methylpyrrolidone (NMP), and the acid value can be measured in accordance with the indicator titration method of JIS K 1557.

The content of the alicyclic structure in the above-mentioned aqueous polyurethane resin dispersion is not particularly limited, and is preferably 10 to 60% by weight in terms of a solid component(s), more preferably 20 to 50% by weight, particularly preferably 25 to 35% by weight. If the content of the alicyclic structure in the above-mentioned aqueous polyurethane resin dispersion is too little, hardness of the coated film becomes low in some cases. Also, if the content of the alicyclic structure in the above-mentioned aqueous polyurethane resin dispersion is too much, when the resulting aqueous polyurethane resin dispersion is coated on the substrate material, redispersibility of the paint or the coated film in a solvent is poor so that removal thereof becomes difficult, whereby recoating is difficultly applied in some cases.

[Neutralizing agent]

It is preferred that the aqueous polyurethane resin dispersion of the present invention is dispersed in an aqueous medium after neutralizing the acidic group of the prepolymer by a neutralizing agent.
The above-mentioned neutralizing agent may be mentioned, for example, organic amines such as trimethylamine, triethylamine, tri-n-propylamine, tributylamine, triethanolamine, aminomethylpropanol, aminomethylpropanediol, aminoethylpropanediol, trihydroxymethylaminomethane, monoethanolamine, triisopropanolamine, etc., inorganic alkali salts such as potassium hydroxide, sodium hydroxide, etc., and further ammonia, etc. These may be used a single kind alone or may be used a plural kinds thereof in combination.
Among the above-mentioned neutralizing agent, organic amines are preferred in the viewpoint of operatability, and triethylamine is more preferred.
An amount of the neutralizing agent to be added is, for example, 0.4 to 1.2 equivalent per 1 equivalent of the acidic group, and preferably 0.6 to 1.0 equivalent.

[Aqueous medium]

In the present invention, the polyurethane resin is dispersed in an aqueous medium. The above-mentioned aqueous medium may be mentioned water or a mixed medium of water and a hydrophilic organic solvent, etc.
The above-mentioned water may be mentioned, for example, tap water, deionized water, distilled water, ultrapure water, etc., and preferably deionized water in view of easiness in obtaining the material and the particles being unstable due to the effects of a salt.
The above-mentioned hydrophilic organic solvent may be mentioned lower monovalent alcohols such as methanol, ethanol, propanol, etc.; polyvalent alcohols such as ethylene glycol, glycerin, etc.; and aprotic hydrophilic organic solvents such as N-methylmorpholine, dimethylsulfoxide, dimethylformamide, N-methylpyrrolidone, etc.
An amount of the above-mentioned hydrophilic organic solvent in the above-mentioned aqueous medium is preferably 0 to 20% by weight.
The coating film obtained by coating the aqueous polyurethane resin dispersion of the present invention is excellent in water resistance and solvent resistance, and also excellent in adhesiveness to an electrodeposition film.
As the above-mentioned electrodeposition film, there are two types of anionic type and cationic type. In general, the cationic type uses a modified epoxy resin as a basic resin and crosslinked by an isocyanate, while the anionic type is crosslinked by oxidation polymerization. In the cationic type, secondary hydroxyl group formed by ring-opening of the epoxy group remains, and in the anionic type, a carboxyl group is introduced, so that it can be considered that they occur crosslinking reaction with the free isocyanate group which is formed by dissociation of the blocking agent during the drying step by heating of the aqueous polyurethane resin dispersion of the present invention. Such an electrodeposition film has been utilized for industrial machines such as heavy machines, agricultural machines, etc., vehicles such as an automobile, bicycle, etc., constriction materials such, as a prefabricated steel frame, a fire door, a sach, etc., and electric devices such as a switchboard, an elevator, a microwave oven, etc.
The aqueous polyurethane resin dispersion of the present invention may be coated, for example, on a substrate material on which the above-mentioned electrodeposition film has formed by using a coating device, etc., and baked at a temperature of 80 to 250°C. Before the baking step, a drying step may be provided, or the aqueous polyurethane resin dispersion is coated and dried, and other paint, etc., is/are coated thereon and dried, then, the material can be baked at once.
When the coated aqueous polyurethane resin dispersion is being baked, the blocking agent of the blocked isocyanate group is dissociated, and it forms a crosslinking structure with an acidic group or the other isocyanate group, etc., whereby it can be considered to form a coating film having more firm adhesiveness and higher hardness.
The above-mentioned baking step and the above-mentioned drying step can be carried out by the general methods.

[Coating composition]

As the coating composition of the present invention, the above-mentioned aqueous polyurethane resin dispersion may be used as such, or various additives may be added thereto.

The above-mentioned additives may be mentioned a plasticizer, defoaming agent, leveling agent, mildewproofing agent, anticorrosive agent, matting agent, flame retardant, tackifier, thixotropic agent, lubricant, antistatic agent, viscosity depressant, thickening agent, diluent, pigment, dye, UV absorber, photo stabilizer, antioxidant, filler, film-forming aid, etc.
The coating composition of the present invention can be coated onto the various substrates such as metal, ceramics, synthetic resin, nonwoven fabric, woven fabric, knitted fabrics, paper, etc.

[Laminated material]

A laminated material of the present invention can be prepared by coating a coating composition containing the above-mentioned aqueous polyurethane resin dispersion on a substrate material, then, heating and drying.
The above-mentioned coating composition containing the above-mentioned aqueous polyurethane resin dispersion may be used the above-mentioned aqueous polyurethane resin dispersion itself as such, or various additives may be added to the above-mentioned aqueous polyurethane resin dispersion.
The above-mentioned additives may be mentioned a plasticizer, deforming agent, leveling agent, mildewproofing agent, anticorrosive agent, matting agent, flame retardant, tackifier, thixotropic agent, lubricant, antistatic agent, viscosity depressant, thickening agent, diluent, pigment, dye, UV absorber, photostabilizer, antioxidant, filler, film-forming aid, etc.
A preparation method of the above-mentioned laminated material is not particularly limited, and may be mentioned, for example, a method in which the above-mentioned coating composition is coated on the above-mentioned substrate material using various kinds of coating devices, and then, drying.
The above-mentioned substrate material is not particularly limited, and there may be mentioned, for example, a glass substrate material, a plastic substrate material such as polyethyleneterephthalate and polytetrafluoroethylene, etc., a metal substrate material, etc. The surface of the above-mentioned respective substrate materials may be treated by a peeling agent.
The above-mentioned coating device is not particularly limited, and there may be mentioned, for example, a bar coater, a roll coater, a gravure roll coater, an air spray, etc.
In the laminated material of the present invention, a thickness of a coating film by the coating composition after drying is not particularly limited, and preferably 0.01 to 0.5 mm.

EXAMPLES

Next, the present invention will be explained in more detail by referring to Examples and Comparative examples, but the scope of the present invention is not limited by these.
Measurements of the physical properties are carried out as follows.

(1) Hydroxyl value: measured in accordance with the method B of JIS K 1557.
(2) Free isocyanate group content: The reaction mixture after completion of the urethanization reaction was sampled in an amount of 0.5 g, and added to a mixed solution comprising 10 mL of 0.1 mol/L (liter) dibutylamine-tetrahydrofuran (THF) solution and 20 mL of THF, and unconsumed dibutylamine was titrated with 0.1 mol/L of hydrochloric acid. From the difference between the titrated value and a blank experiment, a molar concentration of the isocyanate group remained in the reaction mixture was calculated. The molar concentration was converted into a weight ratio of the isocyanate group and made it as a content of the free isocyanate groups. The indicator used in the titration was bromophenol blue.
(3) Acid value: An aqueous polyurethane resin dispersion was coated on a glass plate with a thickness of 0.2 mm, and dried at a temperature of 60°C under reduced pressure of 20 g for 24 hours to obtain a coated film. The obtained coated film was dissolved in N-methylpyrrolidone (NMP), and an acid value in terms of a solid component was measured in accordance with the indicator titration method of JIS K 1557.
(4) As a content of the urethane bondings in terms of a solid component(s) and a content of the urea bondings in terms of a solid component(s), molar concentrations (mol/g) of the urethane bondings and urea bondings were calculated from the charged ratios of respective starting materials for an aqueous polyurethane resin dispersion, and a converted value to a weight ratio was shown. The weight ratio is based on the solid components of the aqueous polyurethane resin dispersion. On a glass substrate was coated 0.3 g of an aqueous polyurethane resin dispersion with a thickness of 0.2 mm, and after dying at 140°C for 4 hours, the remained weight was measured and was divided by the weight before drying to use it as a sold component concentration. The product of the total weight of the aqueous polyurethane resin dispersion and the solid component concentration was made a solid component weight, and the above-mentioned weight ratio was calculated.
(5) As a content of the carbonate bondings in terms of a solid component(s), a molar concentration (mol/g) of the carbonate bondings was calculated from the charged ratios of respective starting materials for an aqueous polyurethane resin dispersion, and a converted value to a weight ratio was shown. The weight ratio is based on the solid components of the aqueous polyurethane resin dispersion, and calculated according to the same method as the content of the above-mentioned urethane bondings in terms of a solid component(s).

(6) As a content of the alicyclic structure in terms of a solid component(s), a weight ratio of alicyclic structure calculated from the charged ratios of respective starting materials for an aqueous polyurethane resin dispersion was shown. The weight ratio is based on the solid components of the aqueous polyurethane resin dispersion, and calculated according to the same method as the content of the above-mentioned urethane bondings in terms of a solid component(s).

(7) A weight average molecular weight of the polyurethane resin in the aqueous polyurethane resin dispersion is measured by gel permeation chromatography (GPC), and a converted value obtained from the calibration curve of the standard polystyrene provisionally prepared was mentioned.

(8) As a content of the isocyanate group (calculated on the isocyanate group) to which a blocking agent is bonded in terms of a solid component(s) in an aqueous polyurethane resin dispersion, a charged molar amount of the blocking agent was concerted into a weight of the isocyanate group and divided by a weight of the solid component(s) of the aqueous polyurethane resin dispersion, and the resulting value was shown. The weight of the solid component(s) of the aqueous polyurethane resin dispersion was calculated according to the same method as the content of the above-mentioned urethane bondings in terms of a solid components).

(9) The maximum drying time of the coated film capable of redispersing in water was measured as follows. The aqueous polyurethane resin dispersion was coated on a glass plate with a size of 20 mm x 60 mm and a thickness of 0.6 mm, and dried in a thermostat room at 23 ˚C by allowing to stand for each 15 minutes, 30 minutes, 45 minutes, 60 minutes, 75 minutes and 90 minutes. When the respective glass plates were immersed in water at 20˚C for 3 minutes, and whether the coated film had been completely peeled off or not only by stirring water was observed with naked eyes. For example, when the coated film was completely peeled off by drying in a thermostat room for 30 minutes, and not completely peeled off by drying for 45 minutes, it was described that a maximum drying time of the coated film capable of redispersing in water was 30 minutes. When the coated film was not completely peeled off by drying in a thermostat room for 15 minutes, it was described that a maximum drying time of the coated film capable of redispersing in water was <15 minutes. Also, even when the coated film was completely peeled off by drying in a thermostat room for 90 minutes, it was described that a maximum, drying time of the coated film capable of redispersing in water was >90 minutes.

(10) The film-forming time was measured as follows. The aqueous polyurethane resin dispersion was coated on a glass plate with a thickness of 0.2 mm, and a time until the film had been forked was measured by a drying time recorder (manufactured by Gardner Co.). The measurement conditions are employed by a room temperature of 23˚C, a humidity of 25%, and a weight of the drying time recorder of 5 g of a weight.

(11) Solvent resistance was evaluated as follows. An aqueous polyurethane resin dispersion was coated on a glass plate with a thickness of 0.2 mm, and after drying at 120˚C for 3 hours, and at 140˚C for 30 minutes, one drop of toluene was spotted on the resulting coated film by a Pasteur pipette, allowing to stand at 25˚C for 1 hour and then the toluene on the coated film was wiped off After wiped off the toluene, whether a trace of the toluene remains on the coated film or not was confirmed with naked eyes, and the case where no trace remained was evaluated as "○", and the case where the trace remained was evaluated as " × ".

(12) Water resistance was evaluated as follows. The aqueous polyurethane resin dispersion was coated on a glass plate with a thickness of 0.2 mm, and after drying at 120˚C for 3 hours, and at 140˚C for 30 minutes, one drop of water was spotted on the resulting coated film by a Pasteur pipette, allowing to stand at 25˚C for 1 hour and then the water on the coated film was wiped off After wiped off the water, whether a trace of the water remains on the coated film or not was confirmed with naked eyes, and the case where no trace remained was evaluated as "○", and the case where the trace remained was evaluated as " ×".

(13) Adhesiveness to the surface of the electrodeposited layer was evaluated as follows. An aqueous polyurethane resin dispersion was coated on a cation electrodeposition coating plate for an automobile steel plate (manufactured by Nippon Testpanel Co., Ltd.) with a thickness of 0.2 mm, and after drying at 120˚C for 3 hours, and at 140˚C for 30 minutes, a cross-cut peel test was carried out by using the resulting coated film. The coated film was cross cut with a distance of 1 mm in length and breadth in an area of 5 mm × 5 mm, adhering an adhesive tape thereon, and when the tape was peeled off, then a number of cross cuts remained on the surface of the electrodeposited layer was counted with naked eyes to carry out evaluation. When 15 cuts were remained among 25 cuts, it was described as 15/25.

(14) Pensil hardness was measured in accordance with JIS K 5400.

[Example 1]

[Preparation of Aqueous polyurethane resin dispersion (1)]

In a reaction vessel equipped with a stirrer, a reflux condenser and a thermometer were charged 142 g of ETERNACOLL UM-90 (1/3) (Registered trademark; polycarbonate diol available from UBE INDUSTRIES, LTD.; number average molecular weight: 900; hydroxyl value: 124.7 mg KOH/g; a polycarbonate diol obtained by reacting a mixture of 1,4-cyclohexanedimethanol and 1,6-hexanedio (1:3 in a molar ratio) and dimethyl carbonate), 5.89 g of neopentylglycol (NPG), 28.9 g of 2,2-dimethylol propionic acid (DMPA) and 159 g of N-methylpyrrolidone (NMP) under nitrogen stream. To the mixture were added 189 g of 4,4'-dicyclohexylmethane diisocyanate (hydrogen-added MDI) and 0.3 g of dibutyltin dilaulate (catalyst), and the resulting mixture was heated to 90˚C and subjected to urethanization reaction for 5 hours. Thereafter, 47.5 g of methyl ethyl ketone oxime (MEKO) was injected into the mixture, and stirring was continued at the same temperature for 1.5 hours to obtain a polyurethane resin. The free isocyanate group content at the time of termination of the urethanization reaction was 0% by weight. To the reaction mixture was added 21.7 g of triethylamine and mixed, and 537 g of the resulting mixture was taken out and added to 900 g of water under vigorous stirring. A content of urethane bondings, a content of urea bondings, a content of carbonate bondings, a weight average molecular weight, a content of the alicyclic structure and a content of the blocked isocyanate group (calculated on the isocyanate group) of the resulting aqueous polyurethane resin dispersion (1) are shown in Table 1. A film-forming time, a maximum drying time of the coated film capable of redispersing in water and a result of the adhesiveness test to the electrodeposited surface of the aqueous polyurethane resin dispersion (1) are shown in Table 2.

[Preparation of Coating layer (A)]

The aqueous polyurethane resin dispersion (1) was coated on a glass plate as a coating composition, and dried at 120˚C for 3 hours to obtain a good coating layer. A film thickness of the obtained coating layer (A) was 0.15 mm, and the test results of its solvent resistance, water resistance and pensil hardness were shown in Table 2.

[Comparative example 1]

[Preparation of Aqueous polyurethane resin dispersion (2)]

In a similar reaction vessel used in Example 1 were charged 186 g of ETERNACOLL UM-90(1/3) (Registered trademark; polycarbonate diol available from UBE INDUSTRIES, LTD.; number average molecular weight: 900; hydroxyl value: 124.7 mg KOH/g; a polycarbonate diol obtained by reacting a mixture of 1,4-cyclohexanedimethanol and 1,6-hexanediol (1:3 in a molar ratio) and dimethyl carbonate), 7.72 g of neopentylglycol (NPG), 37.5 g of 2,2-dimethylol propionic acid (DMPA) and 200 g of N-methylpyrrolidone (NMP) under nitrogen stream. To the mixture were added 250 g of 4,4'-dicyclohexylmethane diisocyanate (hydrogen-added MDI) and 0.3 g of dibutyltin dilaulate (catalyst), and the resulting mixture was heated to 90˚C and subjected to urethanization reaction for 5 hours to obtain a polyurethane prepolymer. The free isocyanate group content at the time of termination of the urethanization reaction was 4.34% by weight. To the reaction mixture was added 28.1 g of triethylamine and mixed, and 675 g of the resulting mixture was taken out and added to 1100 g of water under vigorous stirring. Then, 78.0 g of 35% by weight 2-ethyl-1,5-pentanediamine aqueous solution was added to the mixture, and 40.0 g of 35% by weight butylamine aqueous solution was further added to carry out sealing of the molecular end isocyanate groups to obtain an aqueous polyurethane resin dispersion. A content of urethane bondings, a content of urea bondings, a content of carbonate bondings, a weight average molecular weight, a content of the alicyclic structure and a content of the blocked isocyanate group (calculated on the isocyanate group) of the resulting aqueous polyurethane resin dispersion (2) are shown in Table 1. A film-forming time, a maximum drying time of the coated film capable of redispersing in water and a result of the adhesiveness test to the electrodeposited surface of the aqueous polyurethane resin dispersion (2) are shown in Table 2.

[Preparation of Coating layer (B)]

The aqueous polyurethane resin dispersion (2) was coated on a glass plate as a coating composition, and dried at 120˚C for 3 hours to obtain a good coating layer. A film thickness of the obtained coating layer (B) was 0.15 mm, and the test results of its solvent resistance, water resistance and pensil hardness were shown in Table 2.

[Comparative example 2]

[Preparation of Aqueous polyurethane resin dispersion (3)]

In a similar reaction vessel used in Example 1 were charged 2200 g of ETERNACOLL UH-200 (Registered trademark; polycarbonate diol available from UBE INDUSTRIES, LTD.; number average molecular weight: 2000; hydroxyl value: 56.1 mg KOH/g; polycarbonate diol obtained by reacting 1,6-hexanediol and dimethyl carbonate), 147 g of 2,2-dimethylol propionic acid (DMPA) and 1420 g of N-methylpyrrolidone (NMP) under nitrogen stream. To the mixture were added 995 g of 4,4'-dicyclohexylmethane diisocyanate, (hydrogen-added MDI) and 2.6 g of dibutyltin dilaulate (catalyst), and the resulting mixture was heated to 90˚C and subjected to urethanization reaction for 5 hours. Thereafter, 74.4 g of methyl ethyl ketone oxime (MEKO) was injected into the mixture, and stirring was continued at the same temperature for 1.5 hours to obtain a polyurethane prepolymer. The tree isocyanate group content at the time of termination of the urethanization reaction was 1.75% by weight. To the reaction mixture, was added 111 g of triethylamine and mixed, and 4610 g of the resulting mixture was taken out and added to 7300 g of water under vigorous stirring. Then, 296 g of 35% by weight 2-methyl-1,5-pentanediamine aqueous solution was added thereto, and chain-elongation reaction was carried out to obtain an aqueous polyurethane resin dispersion. A content of urethane bondings, a content of urea bondings, a content of carbonate bondings, a weight average molecular weight, a content of the alicyclic structure and a content of a regeneratable isocyanate group of the resulting aqueous polyurethane resin dispersion (3) are shown in Table 1. A film-forming time, a maximum drying time of the coated film capable ofredispersing in water and a result of the adhesiveness test to the electrodeposited surface of the aqueous polyurethane resin dispersion (3) are shown in Table 2.

[Preparation of Coating layer (C)]

The aqueous polyurethane resin dispersion (3) was coated on a glass plate as a coating composition, and dried at 120˚C for 3 hours to obtain a good coating layer. A film thickness of the obtained coating layer (C) was 0.5 mm, and the test results of its solvent resistance, water resistance and pensil hardness were shown in Table 2.

[Comparative example 3]

[Preparation of Aqueous polyurethane resin dispersion (4)]

In a similar reaction vessel used in Example 1 were charged 99.8 g of ETERNACOLL UH-200 (Registered trademark; polycarbonate diol available from UBE INDUSTRIES, LTD.; number average molecular weight: 2000; hydroxyl value: 56.1 mg KOH/g; polycarbonate diol obtained by reacting 1,6-hexanediol and dimethyl carbonate), 42.7 g of ETERNACOLL UC-100 (Registered trademark; polycarbonate diol available from UBE INDUSTRIES, LTD.; number average molecular weight: 1000; hydroxyl value: 112.2 mg KOH/g; polycarbonate diol obtained by reacting 1,4-cyclohexanedimethanol and dimethyl carbonate), 16.1 g of neopentylglycol (NPG), 27.4 g of 2,2-dimethylol propionic acid (DMPA) and 165 g of N-methylpyrrolidone (NMP) under nitrogen stream. To the mixture were added 199 g of 4,4'-dicyclohexylmethane diisocyanate (hydrogen-added MDI) and 0.3 g of dibutyltin dilaulate (catalyst), and the resulting mixture was heated to 90˚C and subjected to urethanization reaction for 5 hours. Thereafter, 4.57 g of methyl ethyl ketone oxime (MEKO) was injected into the mixture, and stirring was continued at the same temperature for 1.5 hours to obtain a polyurethane prepolymer. The free isocyanate group content at the time of termination of the urethanization reaction was 4.13% by weight. To the reaction mixture was added 20.7 g of triethylamine and mixed, and 496 g of the resulting mixture was taken out and added to 790 g of water under vigorous stirring. Then, 74.4g of 35% by weight 2-methyl-1,5-pentanediamine aqueous solution was added thereto, and chain-elongation reaction was carried out to obtain an aqueous polyurethane resin dispersion. A content of urethane bondings, a content of urea bondings, a content of carbonate bondings, a weight average molecular weight, a content of the alicyclic structure and a content of a reneratable isocyanate group of the resulting aqueous polyurethane resin dispersion (4) are shown in Table 1. A film-forming time, a maximum drying time of the coated film capable of redispersing in water and a result of the adhesiveness test to the electrodeposited surface of the aqueous polyurethane resin dispersion (4) are shown in Table 2.

[Preparation of Coating layer (D)]

The aqueous polyurethane resin dispersion (4) was coated on a glass plate as a coating composition, and dried at 120˚C for 3 hours to obtain a good coating layer. A film thickness of the obtained coating layer (D) was 0.15 mm, and the test results of its solvent resistance, water resistance and pensil hardness were shown in Table 2.
[Table 1]

| | Component (b) nent (d) | Compo- nent | Urethane Urea bondings content [% by weight] | bondings content [% by weight] | Sum of urethane bondings and urea bondings content [% by weight] | Carbonate content bondings content [% by weight] | Weight average molecular weight Mw | Alicyclic structure content [% by wight] | Regeneratable NCO content [% by weight] | Acid value [mg KOH/g] |
|---|---|---|---|---|---|---|---|---|---|---|
| Example 1 | UM90(1/3)/NPG | MEKO | 13.6 | 0.0 | 13.6 | 13.1 | 4,000 | 29.3 | 6.1 | 32.5 |
| Comparative example 1 | UM90C1/3/NPG NPG | MEKO | 12.5 | 8.2 | 20.8 | 12.1 | 30,000 | 29.7 | 0.0 | 29.8 |
| Comparative example 2 | UH-200 | MEKO | 7.4 | 3.1 | 10.5 | 25.2 | 30,000 | 17.5 | 1.1 | 17.5 |
| Comparative example 3 | UH-200/UC- 100/NPG | MEKO | 13.0 | 7.2 | 20.1 | 12.6 | 60,000 | 34.8 | 0.5 | 26.6 |

EP 2 402 381 A1

[Table 2]

| | Maximum drying time of the coated film capable of redisperseing in water [min] | Film-forming time [hr] | Solvent resistance (toluene) | Water resistance | Adhesiveness to electrodeposited | pensil hardness |
|---|---|---|---|---|---|---|
| Example 1 | >90 | >12 | ○ | ○ | 25/25 | F |
| Comparative example 1 | 45 | >12 | ○ | × | 0/25 | B |
| Comparative example 2 | >90 | >12 | ○ | ○ | 25/25 | <6B |
| Comparative example 3 | 15 | 2.5 | ○ | ○ | 25/25 | B |

As shown in Table 2, the aqueous polyurethane resin dispersion of the present invention was controlled in film-preparation rate after coating, and the coating film was easily redispersed in water. Also, hardness of the coating layer was high. Moreover, the coating film obtained by coating and subjecting to heat treatment was excellent in water resistance and solvent resistance, and adhesiveness to the electrodeposition film.

UTILIZABILITY IN INDUSTRY

In the aqueous polyurethane resin dispersion of the present invention, after coating on a substrate material, repaint or removal of an extra coating film can be easily carried out so that its utility and convenience are high. Also, the coating film obtained by the aqueous polyurethane resin dispersion of the present invention is excellent in water resistance, solvent resistance and adhesiveness to the electrodeposition film, has high hardness and can be widely utilized as a material for a film, paint and coating, etc.

**Claims**

1. An aqueous polyurethane resin dispersion which comprises (A) a polyurethane resin obtained by reacting (a) a polyisocyanate compound, (b) at least one polyol compound containing a polycarbonate polyol having a number average molecular weight of 400 to 3000, (c) an acidic group-containing polyol compound, and (d) a blocking agent for an isocyanate group, which dissociates at 80 to 180°C, being dispersed in an aqueous medium, a sum of a content of urethane bodings and a content of urea bondings is 7 to 30% by weight in terms of solid components, a content of carbonate bondings is 8 to 40% by weight in terms of solid components, and a content of an isocyanate group to which the above-mentioned blocking agent has bound is 2 to 10% by weight in terms of solid components and calculated on the isocyanate group.

2. The aqueous polyurethane resin dispersion according to Claim 1, wherein the polyurethane resin has a weight average molecular weight of 1,500 to 10,000.

3. The aqueous polyurethane resin dispersion according to Claim 1 or 2, wherein an acid value is 10 to 40 mg KOH/g in terms of a solid component(s).

4. The aqueous polyurethane resin dispersion according to any one of Claims 1 to 3, wherein the polyurethane resin contains an alicyclic structure, and a content of the alicyclic structure is 10 to 60% by weight in terms of solid components.

5. The aqueous polyurethane resin dispersion according to any one of Claims 1 to 4, wherein (b) the polyol compound contains a polycarbonate polyol having an alicyclic structure.

6. The aqueous polyurethane resin dispersion according to any one of Claims 1 to 5, wherein (a) the polyisocyanate compound is an alicyclic diisocyanate.

7. The aqueous polyurethane resin dispersion according to any one of Claims 1 to 6, wherein (d) the blocking agent is at least one selected from the group consisting of an oxime series compound, a pyrazole series compound and a malonic acid diester series compound.

8. A process for preparing the aqueous polyurethane resin dispersion according to any one of Claims 1 to 7, which comprises

   (1) a step of obtaining a polyurethane resin by reacting (a) a polyisocyanate compound, (b) a polyol compound, (c) an acidic group-containing polyol compound and (d) a blocking agent,
   (2) a step of neutralizing the acidic group in the polyurethane resin, and
   (3) a step of dispersing the polyurethane resin in an aqueous medium.

9. A coating composition which contains the aqueous polyurethane resin dispersion according to any one of Claims 1 to 7.

10. A laminated material which comprises a polyurethane resin coating layer obtained by heating and drying a composition containing the aqueous polyurethane resin dispersion described in any one of Claims 1 to 7 being provided on a surface of a substrate material.

<table>
<tr><td colspan="2">**INTERNATIONAL SEARCH REPORT**</td><td colspan="2">International application No.<br>PCT/JP2010/052759</td></tr>
</table>

**A. CLASSIFICATION OF SUBJECT MATTER**
*C08G18/00*(2006.01)i, *C08G18/10*(2006.01)i, *C08G18/80*(2006.01)i, *C09D5/02*(2006.01)i, *C09D175/04*(2006.01)i

According to International Patent Classification (IPC) or to both national classification and IPC

**B. FIELDS SEARCHED**

Minimum documentation searched (classification system followed by classification symbols)
C08G18/00-18/87, C09D5/02, C09D175/00-175/16, C08L1/00-101/16

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-119749 A  (Dai-Ichi Kogyo Seiyaku Co., Ltd.),<br>17 May 2007 (17.05.2007),<br>claims 1 to 10<br>(Family: none) | 1-10 |
| A | JP 2008-37987 A  (Asahi Kasei Chemicals Corp.),<br>21 February 2008 (21.02.2008),<br>claims 1 to 3<br>(Family: none) | 1-10 |
| A | JP 2008-303284 A  (Asahi Kasei Chemicals Corp.),<br>18 December 2008 (18.12.2008),<br>claims 1 to 5<br>(Family: none) | 1-10 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 May, 2010 (24.05.10) | Date of mailing of the international search report<br>01 June, 2010 (01.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/052759

C (Continuation).    DOCUMENTS CONSIDERED TO BE RELEVANT

| Category* | Citation of document, with indication, where appropriate, of the relevant passages | Relevant to claim No. |
|---|---|---|
| A | JP 10-72520 A  (Takeda Chemical Industries, Ltd.), 17 March 1998 (17.03.1998), claims 1 to 6 (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10120757 A
- JP 2002128851 A
- JP 2000104015 A
- JP 2005220255 A

**Non-patent literature cited in the description**

- Latest polyurethane material and applied techniques. CMC Publishing Co., Ltd, 43